# EUROPEAN PATENT APPLICATION

(11) **EP 4 765 596 A1**
(43) Date of publication of application: **24.06.2026**
(21) Application number: 25224670.7
(22) Date of filing: 17.12.2025
(51) Int. Cl.: H02K 15/0278

(54) **STATOR CORE**

(30) Priority: 20.12.2024 JP 2024225323
(71) Applicant: TOYOTA JIDOSHA KABUSHIKI KAISHA, Toyota-shi, Aichi 471-8571 (JP)
(72) Inventor: URANO, Hiroaki, Toyota-shi, Aichi 471-8571 (JP); DEGUCHI, Junichi, Toyota-shi, Aichi 471-8571 (JP); KAWAKAMI, Jun, Toyota-shi, Aichi 471-8571 (JP); WATANABE, Kohei, Toyota-shi, Aichi 471-8571 (JP); TANAKA, Yuki, Toyota-shi, Aichi 471-8571 (JP); USHIDA, Norihiro, Toyota-shi, Aichi 471-8571 (JP); NAGASAWA, Naohiro, Toyota-shi, Aichi 471-8571 (JP)
(74) Representative: Cabinet Beau de Loménie

(57) **Abstract**

A stator core (20) for a rotary electric machine and having a cylindrical shape centered on a central axis (CA) may include: a plurality of core blocks aligned in an axial direction (z) parallel to the central axis (CA), wherein each core block includes a plurality of electromagnetic steel plates (25) stacked in the axial direction (z) and integrated by being crimped; and a plurality of welded portions (22) arranged on an outer peripheral surface (22s) of the stator core (20), in which each welded portion (22) extends in the axial direction (z), in which the core blocks include a first block (CB1) located farthermost on one side of the axial direction (z) and a second block (CB2) located farthermost on another side of the axial direction (z), and total length of the welded portions (22) on the outer peripheral surface (CB2s) of the second core block (CB2) is shorter than a total length of the welded portions (22) on the outer peripheral surface (CB1s) of the first core block (CB1).

## Description

### CROSS REFERENCE TO RELATED APPLICATIONS

This application claims priority to Japanese Patent Application No. 2024-225323 filed on December 20, 2024. The entire content of the priority application is incorporated herein by reference and to which the person of the art can refer when considering the present disclosure.

### TECHNICAL FIELD

The technology disclosed herein relates to a stator core for a rotary electric machine.

### BACKGROUND ART

Japanese Patent Application Publication No. 2020-78188 describes a stator core for a rotary electric machine having a cylindrical shape centered on a central axis. The stator core has a configuration of a plurality of core blocks stacked on each other. Each of the plurality of core blocks has a configuration where a plurality of electromagnetic steel plates is stacked along an axial direction and integrated by being crimped to each other. The stator core has an outer peripheral surface provided with a welded portion extending in the axial direction. The plurality of core blocks is fixed to each other by the welded portion.

### SUMMARY

There is a case where a stator core may be transported with its central axis coinciding a vertical direction. Also, during such transportation, an upper portion of the stator core may be held to lift the stator core. In this case, each of the plurality of core blocks has its self-weight weighed downward in the vertical direction. A structure of forming linear welded portion(s) extending in the axial direction on the outer peripheral surface of the stator core has been implemented in order to prevent both the crimping portions from being destroyed by the self-weights of the core blocks, and also the core blocks from being disassembled. The disassembling of the core blocks can be prevented by the welded portions fixing the electromagnetic steel plates to each other. However, the welded portions need to be formed over an entire length in the axial direction of the outer peripheral surfaces of all the core blocks in order to prevent the disassembling of all the core blocks. This results in an increased total length of the welded portions. Eddy-current loss occurs at the welded portion(s) because the electromagnetic steel plates, which had been insulated from each other by coating, are electrically connected. Due to this, the longer the total length of the welded portion(s), the eddy-current loss increases.

A stator core for a rotary electric machine and having a cylindrical shape centered on a central axis is disclosed herein. The stator core may comprise: a plurality of core blocks aligned in an axial direction parallel to the central axis. Each of the plurality of core blocks comprises a plurality of electromagnetic steel plates stacked in the axial direction and integrated by being crimped to each other. A plurality of welded portions is arranged on an outer peripheral surface of the stator core, wherein each of the plurality of welded portions extends in the axial direction. The plurality of core blocks includes a first core block located farthermost on one side of the axial direction and a second core block located farthermost on another side of the axial direction. A total length of the plurality of welded portions on the outer peripheral surface of the second core block is shorter than a total length of the plurality of welded portions on the outer peripheral surface of the first core block.

A case where, with the first core block disposed above the second core block in the vertical direction, the stator core is lifted by the upper portion of the stator core being held will be described. In this case, the first core block, positioned at the upper end in the vertical direction, has the self-weights of all the core blocks located below the first core block in the vertical direction weighed thereon, in addition to the self-weight of the first core block weighed thereon. On the other hand, the second core block, positioned at the lower end in the vertical direction, has only the self-weight of the second core block weighed thereon. Accordingly, the second core block has the smaller self-weight than the first core block. In the above configuration, the total length of the welded portions existing on the outer peripheral surface of the second core block is set shorter than the total length of the welded portions existing on the outer peripheral surface of the first core block. That is, the total length of the welded portions is made shorter corresponding to the self-weight of the second core block that is smaller than that of the first core block. In other words, in response to the self-weight being smaller, the fixation force by the welded portions of the electromagnetic steel plates is decreased. Due to this, while preventing the disassembling of the first and second core blocks due to their self-weights, the total length of the welded portions can be shortened. The prevention of the disassembling of core blocks and the suppression of eddy-current loss can both be achieved.

### BRIEF DESCRIPTION OF DRAWINGS

FIG. 1 illustrates a schematic top view of a stator core 20.
FIG. 2 illustrates a cross-sectional view along a line II-II in FIG. 1.
FIG. 3 illustrates a cross-sectional view of a stator core 120 according to a comparative example.
FIG. 4 illustrates a cross-sectional view of a stator core 220 according to a second embodiment.

### DETAILED DESCRIPTION

In one aspect of the present teachings, the plurality of welded portions may include a first welded portion and a second welded portion that are aligned on a same straight line and separated from each other. At least a portion of the first welded portion may be arranged on the outer peripheral surface of the first core block. At least a portion of the second welded portion may be arranged on the outer peripheral surface of the second core block. A length of the second welded portion in the axial direction may be shorter than a length of the first welded portion in the axial direction.

A case where, with the first core block positioned above the second core block in the vertical direction, the stator core is lifted by the upper portion of the stator core being held will be described. Since the second core block is positioned below the first core block, the self-weight of the second core block is relatively smaller. That is, the second core block has a smaller likelihood of disassembling due to self-weight. According to the above configuration, by making the length in the axial direction of the second welded portion shorter than the length in the axial direction of the first welded portion, the disassembling of a core block due to the self-weight can be suppressed while having the total length of the welded potions short.

In one aspect of the present teachings, the first welded portion may be arranged entirely along the axial direction on the outer peripheral surface of the first core block. The second welded portion may be arranged partially along the axial direction on the outer peripheral surface of the second core block.

According to the above configuration, the disassembling of a core block due to self-weight can be suppressed while having the total length of the welded potions short.

In one aspect of the present teachings, the second welded portion may be arranged so as to extend over a boundary between the second core block and a core block adjacent to the second core block.

According to the above configuration, the second core block and the core block next to the second core block can be fixed to each other by the second welded portion.

In one aspect of the present teachings, the plurality of core blocks may include at least one intermediate core block disposed between the first core block and the second core block. The plurality of welded portions may include a third welded portion and a fourth welded portion that extend in the axial direction from the first core block toward the second core block. A length of the fourth welded portion in the axial direction may be shorter than a length of the third welded portion in the axial direction. Positions of the third welded portion and the fourth welded portion on the outer peripheral surface of the stator core may be different.

According to the above configuration, while shortening the total length of the welded portions, the disassembling of the core blocks due to self-weight can be suppressed.

### First Embodiment

### (Structure of Stator Core 20)

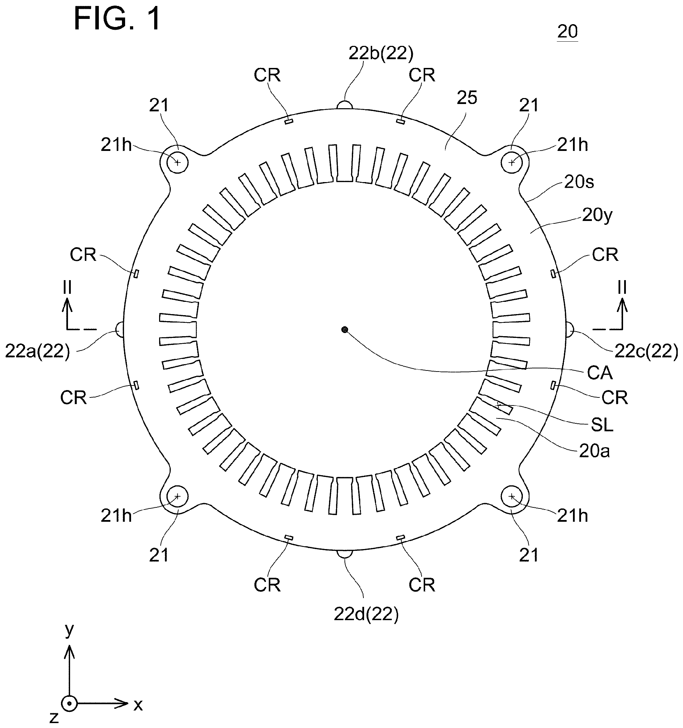

FIG. 1 illustrates a schematic top view of a stator core 20 for a rotary electric machine according to the present embodiment. In FIG. 1, a z direction is a direction along which a central axis CA extends, and x and y directions are directions in a plane perpendicular to the central axis CA. The coordinate system is the same throughout the following figures. Here, for the sake of clear illustration, as to components that appear repeatedly, only one of them may be given a reference numeral.

The stator core 20 is a member having a cylindrical shape centered on the central axis CA. The stator core 20 comprises a cylindrical back yoke 20y. An inner peripheral surface of the back yoke 20y has a plurality of protruding teeth 20a. Slots SL are defined respectively between the adjacent teeth 20a.

The stator core 20 comprises a plurality of fixed portions 21 and a plurality of welded portions 22. The plurality of fixed portions 21 is integrated with the stator core 20. The plurality of fixed portions 21 is aligned along an outer peripheral surface 20s of the stator core 20. The plurality of fixed portions 21 is arranged at equal intervals along a circumferential direction centered on the central axis CA. In the example of FIG. 1, four fixed portions 21 are arranged in rotational symmetry at 90-degree intervals. Each of the plurality of fixed portions 21 has a through hole 21h parallel to the central axis CA.

The welded portions 22 are beads formed between metal parts joined by welding. The welded portions 22 extend in the axial direction (z direction). The welded portions 22 are disposed in plurality on the outer peripheral surface 20s of the stator core 20. The plurality of welded portions 22 is disposed at different locations in the circumferential direction centered on the central axis CA. In the example of FIG. 1, four welded portions 22a to 22d are arranged at equal intervals along the circumferential direction.

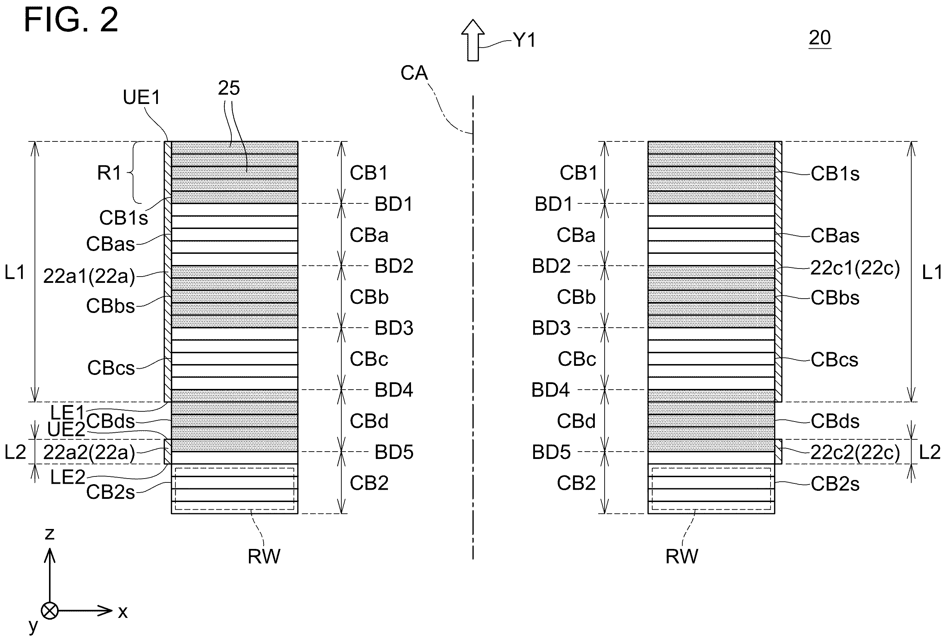

FIG. 2 illustrates a cross-sectional view taken along a line II-II in FIG. 1. FIG. 2 illustrates the cross-sectional view passing through the central axis CA and through the two welded portions 22a and 22c. Here, in FIG. 2, a dimension in the x direction is drawn shorter than that of FIG. 1. Also, for clear illustration, a first core block CB1 and middle core blocks CBb and CBd are shown in gray shades.

The stator core 20 comprises a plurality of core blocks aligned along the axial direction (z direction) parallel to the central axis CA. Each of the plurality of core blocks has a same shape. The number of stacked core blocks may be various. In the present embodiment, the stator core 20 is constituted of six core blocks. The six core blocks include the first core block CB1, four middle core blocks CBa to CBd, and a second core block CB2. The first core block CB1 is a core block located farthermost on one side (+ z direction side) of the axial direction. The second core block CB2 is a core block located farthermost on another side (-z direction side) of the axial direction. The middle core blocks CBa to CBd are arranged between the first core block CB1 and the second core block CB2.

Each of the six core blocks comprises a plurality of electromagnetic steel plates 25 stacked along the axial direction. The number of the electromagnetic steel plates 25 constituting a core block may be various. In the present embodiment, one core block is configured by five electromagnetic steel plates 25 being stacked on each other.

Each of the six core blocks comprises a plurality of crimping portions CR (see FIG. 1). The plurality of crimping portions CR is arranged along the circumferential direction centered on the central axis CA. The plurality of crimping portions CR is sections where the five electromagnetic steel plates 25 are integrated by being crimped to each other.

A boundary BD1 is defined between the first core block CB1 and the middle core block CBa. A boundary BD2 is defined between the middle core blocks CBa and CBb. A boundary BD3 is defined between the middle core blocks CBb and CBc. A boundary BD4 is defined between the middle core blocks CBc and CBd. A boundary BD5 is defined between the middle core block CBd and the second core block CB2. Each of the boundaries BD1 to BD5 is not crimped. Each of the boundaries BD1 to BD5 is fixed therebetween by the welded portion 22, as will be described below.

As illustrated in FIG. 2, the welded portions 22a include a first welded portion 22a1 and a second welded portion 22a2. The first welded portion 22a1 and the second welded portion 22a2 are aligned along the same line, and are separated from each other. A length in the axial direction of the first welded portion 22a1 is a length L1. A length in the axial direction of the second welded portion 22a2 is a length L2. The length L2 is smaller than the length L1.

At least a part of the first welded portion 22a1 is disposed on an outer peripheral surface CB1s of the first core block CB1. In the example of FIG. 2, an upper end UE1 of the first welded portion 22a1 is located at an end of +the z direction of the first core block CB1. A lower end LE1 of the first welded portion 22a1 is located within the middle core block CBd. That is, the first welded portion 22a1 is arranged so as to extend over the boundaries BD1 to BD4. Due to this, the first core block CB1 and the middle core blocks CBa to CBd are fixed integrally. Also, the first welded portion 22a1 is disposed entirely along the axial direction on each of the outer peripheral surface CB1s of the first core block CB1, an outer peripheral surface CBas of the middle core block CBa, an outer peripheral surface CBbs of the middle core block CBb, and an outer peripheral surface CBcs of the middle core block CBc. Due to this, the electromagnetic steel plates can be fixed to each other in each of the first core block CB1 and the middle core blocks CBa to CBc.

At least a part of the second welded portion 22a2 is disposed on an outer peripheral surface CB2s of the second core block CB2. In the example of FIG. 2, an upper end UE2 of the second welded portion 22a2 is located within the middle core block CBd. Also, a lower end LE2 of the second welded portion 22a2 is located within the second core block CB2. That is, the second welded portion 22a2 is disposed so as to extend over the boundary BD5. Due to this, the middle core block CBd and the second core block CB2 can be fixed to each other. On the outer peripheral surface CB2s of the second core block CB2, the second welded portion 22a2 is disposed only partially along the axial direction. Accordingly, in a region RW of the second core block CB2 where the second welded portion 22a2 is not disposed, the electromagnetic steel plates 25 are fixed only by being crimped.

Similarly, the welded portions 22b include a first welded portion 22b1 and a second welded portion 22b2. The welded portions 22c include a first welded portion 22c1 and a second welded portion 22c2. The welded portions 22d include a first welded portion 22d1 and a second welded portion 22d2. The configuration of the first welded portions 22b1 to 22d1 is the same as that of the above-mentioned first welded portion 22a1. The configuration of the second welded portions 22b2 to 22d2 is the same as that of the above-mentioned second welded portion 22a2. Accordingly, detailed descriptions thereof may be omitted.

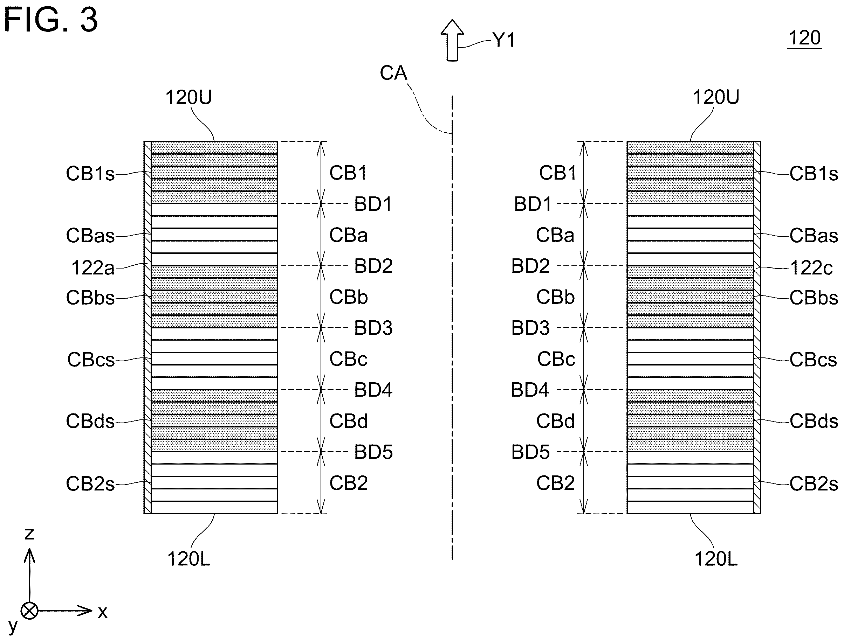

The first welded portions 22a1 to 22d1 are disposed in the circumferential direction on the outer peripheral surface CB1s of the first core block CB1. Each of the first welded portions 22a1 to 22d1 is disposed entirely along the axial direction on the outer peripheral surface CB1s (i.e., over five electromagnetic steel plates) (see region R1 in FIG. 3). Accordingly, the total length of the welded portions existing on the outer peripheral surface CB1s corresponds to the thickness of twenty electromagnetic steel plates. Further, the second welded portions 22a2 to 22d2 are disposed along the circumferential direction on the outer peripheral surface CB2s of the second core block CB2. Each of the second welded portions 22a2 to 22d2 is disposed only on a part of the outer peripheral surface CB2s (i.e., only on one electromagnetic steel plate). Accordingly, the total length of the welded portions existing on the outer peripheral surface CB2s corresponds to the thickness of four electromagnetic steel plates. That is, the total length of the welded portions existing on the outer peripheral surface CB2s of the second core block CB2 is shorter than the total length of the welded portions existing on the outer peripheral surface CB1s of the first core block CB1.

### (Manufacturing Method of Stator Core 20)

An electromagnetic steel plate is punched into a flat plate shape of the stator core 20 by a punching mechanism that is not shown. The punched electromagnetic steel plate has fixed portions 21 and teeth 20a as illustrated in FIG. 1. Five punched electromagnetic steel plates are stacked on each other, and crimping portions CR are formed by a press machine. Through these processes, a core block is completed.

Next, as illustrated in FIG. 2, six core blocks are stacked in the axial direction, and then welding is performed on the outer peripheral surface 20s. The welding is for example tungsten inert gas (TiG) welding. Due to this, the welded portions 22 are formed. The welded portions 22 make each of the boundaries BD1 to BD5 welded therebetween. Due to this, the six core blocks are integrated, by which the stator core 20 is completed.

In the welding, the extreme top layer of the outer peripheral surface 20s is welded. Due to this, generation of eddy current and/or increase in iron loss in the welded portions 22 can be minimized.

### (Problem to be Solved)

By using a stator core 120 according to a comparative example of FIG. 3, a problem to be solved will be described. FIG. 3 illustrates a similar layout to that of FIG. 2. The stator core 120 of the comparative example (FIG. 3) has different configurations of welded portions 122a and 122c as compared to the stator core 20 (FIG. 2) of the present embodiment. As to common features between FIG. 3 and FIG. 2, same reference numerals are given to them, by which descriptions thereof may be omitted.

There is a case where a stator core may be transported with the central axis CA coinciding the vertical direction (z direction). Also, during such transportation, an upper portion of the stator core may be held to lift the stator core upward (along arrow Y1). In this case, each of the six core blocks has its self-weight weighed thereon downward in the vertical direction (-z direction). A structure of forming linear welded portion(s) extending in the axial direction on the outer peripheral surface of the stator core has been implemented in order to prevent the crimping portions CR from being destroyed by the self-weights of the core blocks, and the core blocks from being disassembled. The disassembling of the core blocks can be prevented by the welded portions fixing the electromagnetic steel plates to each other. Eddy-current loss however occurs at the welded portions because the electromagnetic steel plates, which had been insulated from each other by coating, are electrically connected. Due to this, the longer the total length of the welded portions, the eddy-current loss increases.

In the stator core 120 (FIG. 3) of the comparative example, the welded portions 122a and 122c are disposed entirely along the axial direction on the outer peripheral surfaces of the six core blocks. That is, the welded portions 122a and 122c are continuously disposed from an upper end 120U to a lower end 120L of the stator core 120. There had been a problem of eddy-current loss being great because the total length of the welded portions was long.

### (Effects)

A case where, in FIG. 2, the stator core 20 is lifted upward (toward arrow Y1) by the upper portion of the stator core 20 being held will be described. In this case, the first core block CB1, positioned at the upper end in the vertical direction, has the self-weights of all the core blocks located below the first core block CB1 in the vertical direction (the middle core blocks CBa to CBd and the second core block CB2) weighed thereon, in addition to the self-weight of the first core block CB1 weighed thereon. On the other hand, the second core block CB2, positioned at the lower end in the vertical direction, has only the self-weight of the second core block CB2 weighed thereon. Accordingly, the second core block CB2 has a smaller applied load than the first core block CB1. That is, the lower the core block is located in the vertical direction, the lower the likelihood of generation of breakage of crimping becomes (the disassembling of core blocks happens less).

According to the present embodiment, as mentioned above, the total length of the welded portions existing on the outer peripheral surface CB2s of the second core block CB2 is set shorter than the total length of the welded portions existing on the outer peripheral surface CB1s of the first core block CB1. That is, in response to the applied load being smaller, the fixation force by the welded portions of the electromagnetic steel plates is decreased. Due to this, while preventing the disassembling of the first core block CB1 and the second core block CB2 due to their self-weights, the total length of the welded portions can be shortened. The prevention of disassembling of the core blocks and the suppression of eddy-current loss can both be achieved.

In the present embodiment, the length L2 of the second welded portion 22a2 positioned lower is set shorter than the length L1 of the first welded portion 22a1 positioned higher. That is, in the core block having a greater self-weight due to being positioned higher (such as the first core block CB1, and the middle core blocks CBa to CBc), the first welded portion 22a1 is disposed entirely along the axial direction on its outer peripheral surface. Because the electromagnetic steel plates can be fixed together by the first welded portion 22a1, the disassembling of the core blocks due to the self-weights can be suppressed. On the other hand, in the core blocks having a smaller self-weight due to being positioned lower (such as the middle core block CBd and the second core block CB2), the electromagnetic steel plates can be sufficiently fixed by being crimped together. Thus, since the second welded portion 22a2 needs to be disposed only over the boundary between the core blocks, the length of the welded portions can be made short. While having the total length of the welded portions short, the disassembling of the core blocks due to self-weights can be suppressed. Accordingly, the eddy-current loss can be suppressed. Here, the same effects as the aforementioned welded portions 22a can also be achieved by the welded portions 22b to 22d.

### Second Embodiment

### (Configurations of Base Portions 220b)

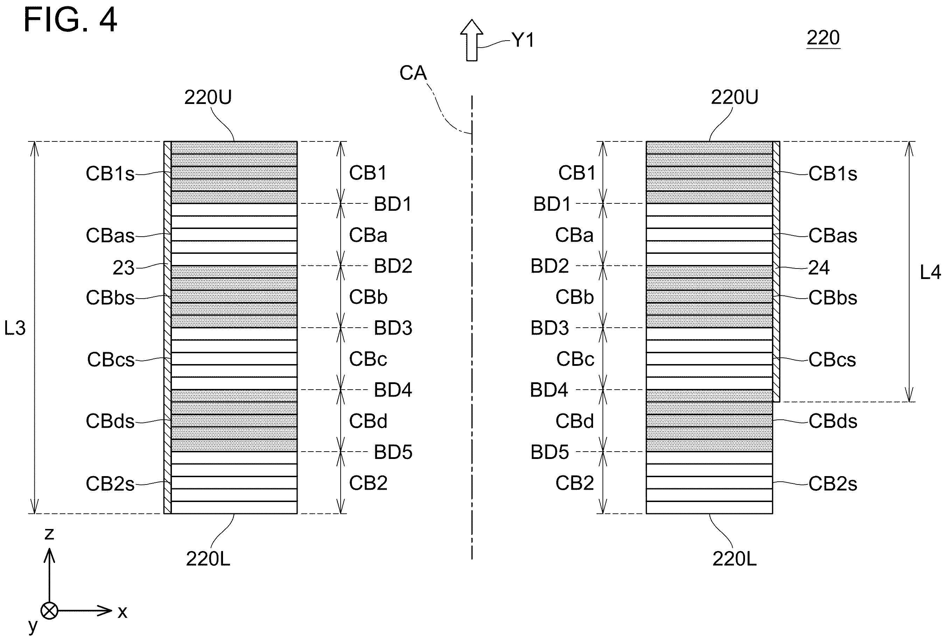

FIG. 4 illustrates a cross-sectional view of a stator core 220 of the second embodiment. FIG. 4 illustrates a similar layout to FIG. 2. That is, FIG. 4 is a cross-sectional view passing through the central axis CA and through two welded portions, i.e., a third welded portion 23 and a fourth welded portion 24. The stator core 220 (FIG. 4) of the second embodiment differs from the stator core 20 (FIG. 2) of the first embodiment about the stator core 220 comprising the third welded portion 23 and the fourth welded portion 24. As to common features between FIG. 4 and FIG. 2, same reference numerals will be given to them, by which descriptions thereof may be omitted.

The third welded portion 23 and the fourth welded portion 24 are disposed at different positions on the outer peripheral surface of the stator core 220. That is, the third welded portion 23 is disposed at an -x direction end of the circumferential direction. The fourth welded portion 24 is disposed at an +x direction end of the circumferential direction. The length in the axial direction of the third welded portion 23 is a length L3. The length in the axial direction of the fourth welded portion 24 is a length L4. The length L4 is shorter than the length L3.

The third welded portion 23 extends in the axial direction from within the first core block CB1 toward the second core block CB2. Specifically, the third welded portion 23 is disposed continuously from an upper end 220U to a lower end 220L of the stator core 220. Due to this, all the core blocks (the first core block CB1, the middle core blocks CBa to CBd, and the second core block CB2) can be integrally fixed. Further, in each of all the core blocks, the electromagnetic steel plates can be fixed to each other.

The fourth welded portion 24 extends in the axial direction from within the first core block CB1 toward the second core block CB2. Specifically, the fourth welded portion 24 extends from within the first core block CB1 into the middle core block CBd. Due to this, upper five core blocks (the first core block CB1 and the middle core blocks CBa to CBd) can be integrally fixed. Further, in each of the upper four core blocks (the first core block CB1 and the middle core blocks CBa to CBc), the electromagnetic steel plates can be fixed to each other.

### (Effects)

A case where in FIG. 4 the upper portion of the stator core 220 is held to be lifted upward (along arrow Y1) will be described. In this case, as mentioned above, the lower the core block is located in the vertical direction, the smaller the self-weight becomes, by which the breakage of the crimping due to the self-weight happens less (the disassembling of the core blocks happens less). Here, in the present embodiment, in the plurality of welded portions disposed in the circumferential direction, the lengths in the axial direction of the welded portions are made different from each other. Specifically, the length L3 of the third welded portion 23 is set shorter than the length L4 of the fourth welded portion 24. In other words, in the lower core blocks in the vertical direction where the disassembling of core blocks happens less, the fourth welded portion 24 is omitted. Due to this, while suppressing the disassembling of core blocks due to self-weights, the total length of the welded portions can be shortened. Eddy-current loss can be suppressed.

### (Modifications of Second Embodiment)

The third welded portion 23 and the fourth welded portion 24 shown in the second embodiment are an example. As long as the length L4 is shorter than the length L3 and the upper ends of the third welded portion 23 and the fourth welded portion 24 are located within the first core block CB1, the third welded portion 23 and the fourth welded portion 24 may be configured in various ways. Further, the upper ends of the third welded portion 23 and the fourth welded portion 24 may not necessarily be on the upper end 220U of the stator core 220, but simply needs to be within the outer peripheral surface CB1s.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

### (Modifications)

Layouts of the welded portions 22 (FIG. 2) and/or the third welded portion 23 and the fourth welded portion 24 (FIG. 4) may be various, and these welded portions may be combined. Also, for example, one or more of the plurality of welded portions disposed along the circumferential direction may be made the welded portion 22, the third welded portion 23, and/or the fourth welded portion 24.

## Claims

1. A stator core (20) for a rotary electric machine and having a cylindrical shape centered on a central axis (CA), the stator core (20) comprising:
a plurality of core blocks aligned in an axial direction (z) parallel to the central axis (CA), wherein each of the plurality of core blocks comprises a plurality of electromagnetic steel plates (25) stacked in the axial direction (z) and integrated by being crimped to each other; and
a plurality of welded portions (22) arranged on an outer peripheral surface (22s) of the stator core (20), wherein each of the plurality of welded portions (22) extends in the axial direction (z),
wherein the plurality of core blocks includes a first core block (CB 1) located farthermost on one side of the axial direction (z) and a second core block (CB2) located farthermost on another side of the axial direction (z), and
a total length of the plurality of welded portions (22) on an outer peripheral surface (CB2s) of the second core block (CB2) is shorter than a total length of the plurality of welded portions (22) on an outer peripheral surface (CB1s) of the first core block (CB1).

2. The stator core (20) according to claim 1, wherein
the plurality of welded portions (22) includes a first welded portion (22a1) and a second welded portion (22a2) that are aligned on a same straight line and separated from each other,
at least a portion of the first welded portion (22a1) is arranged on the outer peripheral surface (CB 1s) of the first core block (CB1),
at least a portion of the second welded portion (22a2) is arranged on the outer peripheral surface (CB2s) of the second core block (CB2), and
a length of the second welded portion (22a2) in the axial direction (z) is shorter than a length of the first welded portion (22a1) in the axial direction (z).

3. The stator core (20) according to claim 2, wherein
the first welded portion (22a1) is arranged entirely along the axial direction (z) on the outer peripheral surface (CB 1s) of the first core block (CB1), and
the second welded portion (22a2) is arranged partially along the axial direction (z) on the outer peripheral surface (CB2s) of the second core block (CB2).

4. The stator core (20) according to claim 3, wherein
the second welded portion (22a2) is arranged so as to extend over a boundary (BD5) between the second core block (CB2) and a core block (CBd) adjacent to the second core block (CB2).

5. The stator core (220) according to any one of claims 1 to 4, wherein
the plurality of core blocks includes at least one intermediate core block (CBa-CBd) disposed between the first core block (CB1) and the second core block (CB2),
the plurality of welded portions includes a third welded portion (23) and a fourth welded portion (24) that extend in the axial direction (z) from the first core block toward the second core block,
a length of the fourth welded portion (24) in the axial direction (z) is shorter than a length of the third welded portion (23) in the axial direction (z), and
positions of the third welded portion (23) and the fourth welded portion (24) on the outer peripheral surface of the stator core (220) are different.
